# EUROPEAN PATENT SPECIFICATION

(11) **EP 1 693 231 B1**
(45) Date of publication and mention of the grant of the patent: **27.07.2011**
(21) Application number: 04820148.7
(22) Date of filing: 30.11.2004
(51) Int. Cl.: B60C 23/00, B60C 23/06, B60C 11/24, G01M 17/02

(54) **DEVICE AND METHOD FOR DETECTING ABNORMALITY OF ROTATING BODY**
VORRICHTUNG UND VERFAHREN ZUR ERFASSUNG EINER ANOMALITÄT EINES DREHKÖRPERS
DISPOSITIF ET PROCEDE SERVANT A DETECTER L'ANOMALIE D'UN CORPS EN ROTATION

(30) Priority: 12.12.2003 JP 2003414353; 28.04.2004 JP 2004133257; 30.07.2004 JP 2004223607
(43) Date of publication of application: 23.08.2006
(73) Proprietor: Bridgestone Corporation, Tokyo 104-8340 (JP)
(72) Inventor: Murakami, Kazutomo, c/o Bridgestone Corporation, Kodaira-shi, Tokyo 1878531 (JP); Ueda, Hiroyuki, c/o Bridgestone Corporation, Kodaira-shi, Tokyo 1878531 (JP)
(74) Representative: Whalley, Kevin
(86) International application number: PCT/JP2004/017795
(87) International publication number: WO 2005/056312

(56) References cited:
- EP-A2- 1 308 320
- WO-A1-01/98123
- JP-A- 2000 255 230
- JP-A- 2002 120 529
- JP-A- 2002 240 520
- JP-A- 2003 094 919
- JP-A- 2003 146 036
- US-A1- 2002 162 389
- US-A1- 2003 006 890

## Description

### TECHNICAL FIELD

The present invention relates to a device and method for detecting an abnormality of a rotating body (for example tire) to prevent an accident caused by a trouble on the rotating body beforehand.

### BACKGROUND ART

As a device for detecting an abnormality of a rotating body, for example tire, the internal pressure -abnormality alarming device is known, which alerts the driver by means of an alarm when the internal pressure of the tire becomes lower than a given value. The device is designed to measure the internal pressure by means of an internal pressure sensor attached to a wheel of tire, and to give an alarm when the internal pressure becomes lower than the given value.

However, by means of this type of internal pressure abnormality alarming device, it can't detect a trouble caused by a factor except a drop of the internal pressure. As an example of such a trouble, there is a separation occurred between a tread and a belting, between codes which constitute the belt, and between a side rubber and a carcass ply, or a breaking of a ply cord or a belting cord, or a chunk out of a tread rubber (wherein, for example, the block land portion arranged on a tread is picked off). If a car continues running with these tire troubles occurred, it may cause a sudden tire burst, so that it may be incapable of running anymore, and in addition it may cause a big accident.

As a system for detecting a trouble except the trouble of such an internal pressure, a system for detecting an abnormality of the rotating body (for example Japanese Patent Laid-Open Publication No.2003-80912) which detects an abnormality of a tire by measuring the data of vibration and sound of the tire, and compare it with those of normal time measured previously, is known. Even with this type of detecting system of abnormality of the rotating body, it can detect the abnormality of the tire in a sufficient level, but the device for detecting the abnormality of the rotating body with a simple configuration and an excellent performance was required in recent years. Attention is drawn to US2002/162,389.

### DISCLOSURE OF INVENTION

An object of the present invention is to provide a device and method for detecting an abnormality of the rotating body, which can prevent an accident from occurring by detecting the tire burst or a separation of the tread of the rotating body, in particular tire, in early stage.

According to the invention, the device for detecting an abnormality of rotating body is characterized in that the improvement comprises: means for measuring various physical quantities of the rotating body in rotation; means for extracting a signal which is synchronized with the rotation of the rotating body from the data measured by the measuring means; means for determining a condition of the rotating body from the signal extracted by the extracting means; and abnormality warning means for giving a warning of abnormality when the determining means determine that the condition of the rotating body is abnormal; wherein the extracting means comprise an adaptive digital filter in which the device extracts a signal synchronized with the rotation and picks out a signal having no correlation with the rotation by means of a data measured by the measuring means and a signal synchronized with the rotation extracted by the extracting means, and adapts the adaptive digital filter by means of the thus picked out signal having no correlation with the rotation.

In a preferred example of a device for detecting an abnormality of a rotating body according to the invention, the various physical quantities of a rotating body measured by the measuring means have correlation with vibration, sound, rotating speed, or rotation; the delayed data of the rotation information data measured by the measuring means is used for extracting a signal synchronized with the rotation; the delay time of the rotation information data is a time corresponding to one rotation of the rotating body; the delay circuit to make data delay is provided on a signal line between an input portion of rotation information data from the measuring means and an adaptive digital filter; and the delay circuit to make data delay is provided on a signal line between the input portion of rotation information data from the measuring means and a comparator for picking out the signal having no correlation with the rotation.

In addition, in another preferred example of a device for detecting an abnormality of the rotating body according to the invention, an order component which generated by calculating the rotational cycle by means of the rotation information data provided by the measuring means is used in extracting a signal synchronized with the rotation in the extracting means; and the order component generation circuit is provided on a signal line between an input portion of the rotation information data from the measuring means and the adaptive digital filter.

Furthermore, the other preferred example of a device for detecting the abnormality of the rotating body according to the invention, in extracting a signal synchronized with the rotation in the extracting means, the data measured by the measuring means is variably sampled in accordance with the rotation information data provided by the measuring means to make an apparent cycle constant, and the variable sampling circuit is provided on an input portion of the rotation information data from the measuring means for performing the variable sampling.

In addition, a method for detecting an abnormality of a rotating body according to the invention is characterized in that, by means of the device for detecting an abnormality of a rotating body having said configuration, a signal synchronized with the rotation is extracted from the various physical quantities of a rotating body in rotation, and an abnormality of the rotating body is detected using the extracted signal.

### BRIEF DESCRIPTION OF DRAWINGS

[Fig.1] Fig.1 is a figure to explain an example of a device for detecting an abnormality of a rotating body according to the invention.
[Fig.2] Fig.2 is a block diagram to explain an example of an extracting means according to the invention.
[Fig.3] Fig.3 is a block diagram to explain another example of an extracting means according to the invention.
[Fig.4] Figs.4(a) and (b) are figures to show the state of a vehicle when measuring the actual waveform.
[Fig.5] Fig.5 is a figure to show one example of input signal X (i), output signal Y (i), error signal E (i) of each tire in good road.
[Fig.6] Fig.6 is a figure to show one example of input signal X (i), output signal Y (i), error signal E (i) of each tire in rough road.
[Fig.7] Fig.7 is a block diagram to explain a still another example of an extracting means according to the invention.
[Fig.8] Fig.8 is a figure to show one example of input signal X (i), output signal Y (i) (here, showing 3 output signals), error signal E (i) (here, showing 3 error signals) in the extracting means of Fig.7.
[Fig.9] Fig.9 is a block diagram to explain a still another example of an extracting means according to the invention.
[Fig.10] Figs.10 (a) and (b) are block diagrams to explain a still other example of an extracting means according to the invention.

### BEST MODE FOR CARRYING OUT THE INVENTION

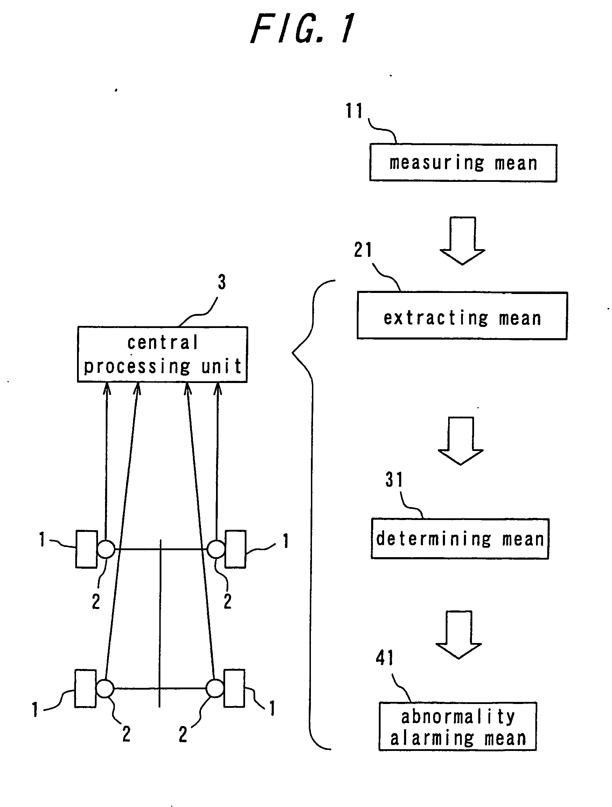

Fig.1 is a figure to explain an example of a device for detecting an abnormality of a rotating body according to the invention. Even though the explanation of the invention in the example of the Fig.1 is based on tires installed on a vehicle as rotating bodies, it is clear that the invention is also able to be adapted to another rotating bodies except tire as long as it is intended to detect the abnormality of the rotating body in rotation.

In an example shown in Fig.1, references 1 are tires used as rotating bodies, references 2 are sensors mounted on each tire for measuring the vibration or sound of those, reference 3 is a central processing unit for detecting the abnormality of tires 1 by signals measured by respective sensors 2. The device for detecting an abnormality of a rotating body according to the invention comprises: measuring means 11 for measuring physical quantities such as vibrations or sounds by means of respective sensors 2; extracting means 21 for extracting a signal which is synchronized with the rotations of tires 1 from the data measured by measuring means 11; determining means 31 for determining conditions of the tires 1 from the signal extracted by the extracting means 21; and abnormality warning means 41 for giving a warning of abnormality to a driver when the determining means 31 determine the conditions of a tire 1 is abnormal.

The measuring means 11 measures sounds or vibrations around tires 1 by means of sensors 2, or a signal of rotating speed of for example ABS (no need of sensors 2), and send those measured data to the extracting means 21 in a form of digital signal. In measuring a sound, a sensor such as microphone is used as sensor 2. In measuring a vibration, a sensor such as accelerometer, speedometer, or displacement meter is used as sensor 2. In addition, when ABS (the Anti-lock Brake System) is installed on the vehicle, the rotating speed signal of the ABS can be used. In this case, there is no need for providing a sensor 2, and the device can be done with simple configuration. Without using ABS, the rotating speed signal can be used by measuring a rotating speed or a signal synchronized with the rotation of tire, by means of another methods.

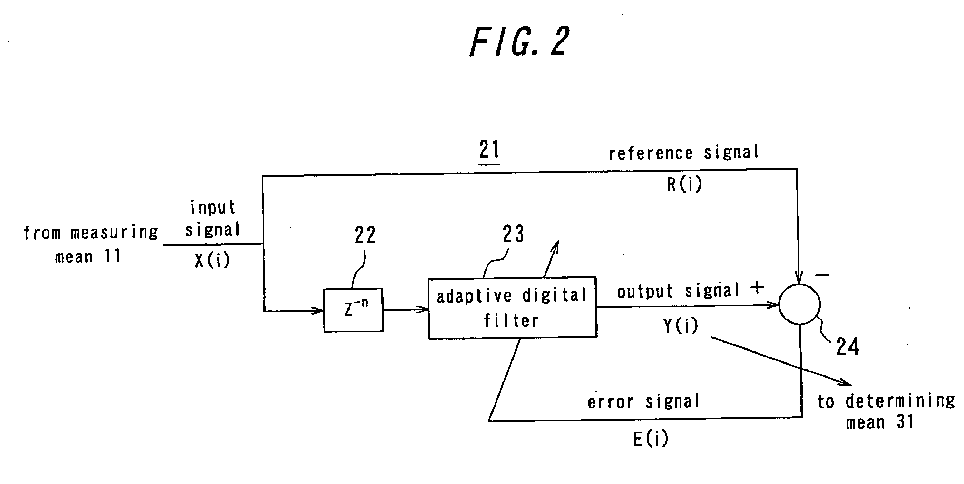

In extracting means 21, it is preferred to extract a cycle component synchronized with the rotation of the tire 1 by means of the adaptive digital filter. Namely, as one example of configuration of the extracting means 21 shown in Fig.2, in the extracting means 21, digital signal X(i) measured by the measuring means 11 is inputted to the extracting means 21, the input signal and delay signal of the input signal delayed by a delay circuit 22 are operated in the adaptive digital filter in real time, and a signal correlated with the cycle of the tire 1 is outputted as a output signal Y(i), the input signal is sent to the adaptive digital filter through a comparator 24 as a reference signal R(i), and the delay signal is sent to the adaptive digital filter directly. Therefore the output signal Y(i) can be given as a signal which have a correlation with the rotation of the tire 1, in other words cyclical signal. The given output signal Y(i) is inputted to the determining means 31.

Delay time generated in the delay circuit 22 is preferably shorter than the time corresponding to one cycle of the tire 1. However, if the time is longer than two cycles, or is little bit shorter or longer than the one cycle, there is no problem in giving a cycle component synchronized with the rotation due to characteristics of the adaptive digital filter 23. In addition, in a case the cyclical time of the tire 1 differs according to the rotating speed (running speed of the vehicle), it is able to give a cycle component by setting sampling frequency and tap length of the adaptive digital filter 23 well. Moreover, it can be done by setting the delay time in advance for tree stages, low speed, middle speed, and high speed, and changing the delay time of the delay circuit 22 in tree stages based on the speed of the vehicle. Of course, it can be done by measuring the speed of a vehicle all the time, and changing the delay time of the delay circuit 22 in real time in accordance with the measured speed.

The adaptive digital filter 23 can be of a known conventional constitution. In the example shown in Fig.2, reference signal R(i) consisted of the digital data X(i) measured by the measuring means 11, and the output signal Y(i) from the adaptive digital filter are calculated in the comparator 24 and the difference of those are calculated, and it is given as error signal E(i). Therefore error signal E(i) can be given as a signal unrelated to a rotation of tire 1, and as a random signal related to the surface of the road or the body of the vehicle itself. And the adaptive digital filter 23 is optimized by changing the coefficient of it dynamically in response to the error signal E(i) fed back to a coefficient change portion of the adaptive digital filter 23.

For the method to optimize the filter 23 by feeding back the error signal E(i) to the coefficient change portion of the adaptive digital filter 23, adaptive methods known as a filter coefficient updating algorithm can be used, such as LMS (Least Mean Square) method, Newton method, or Steepest descent method. In addition, following methods also can be used as the adaptive algorithm preferably; Complex Least Mean Square Algorithm, Normalized Least Mean Square Algorithm, Projection Algorithm, Simple Hyper stable Adaptive Recursive Filter Algorithm, Recursive Least Square Algorithm, Fast Least Mean Square Algorithm, Adaptive Filter using Discrete Cosine Transform, Single Frequency Adaptive Notch Filter, Neural Network, and Genetic Algorithm.

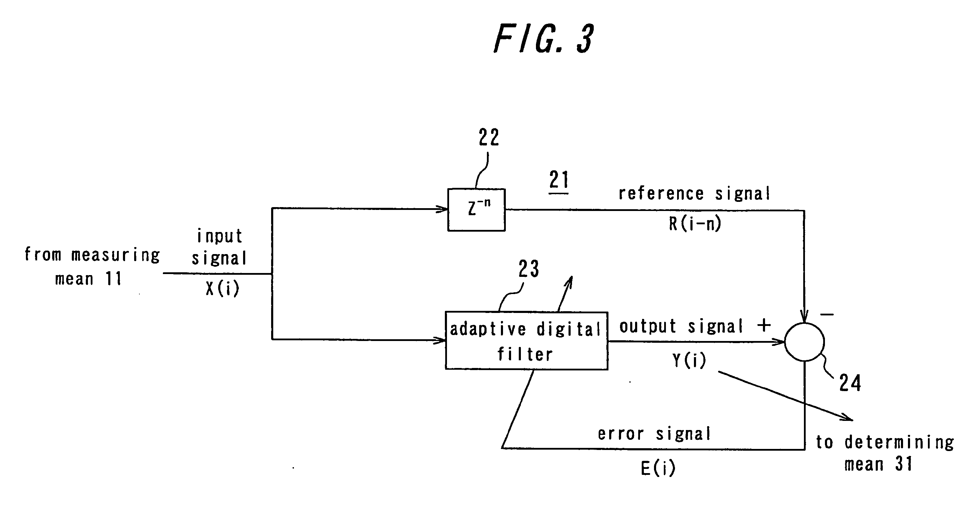

For an example of the extracting means 21, there is another example different from the example in which the delay circuit 22 is provided between the input portion of the digital signal X(i) and the adaptive digital filter 23 as shown in the Fig.2. Such example can be used in which the delay circuit 22 is provided between the input portion of the digital signal X(i) from the measuring means 11 and the comparator 24 for delaying the reference signal R(i) as shown in the Fig.3, so that the same functions and effects to the case of the invention of the Fig.2 can be obtained.

The determining means 31 determines a tire 1 having abnormal values as abnormal by using the output signal Y(i) of the adaptive digital filter of the extracting means, and comparing it with the normal value of the each tire 1 ,or comparing output signals of 2 tires (front and rear, or right and left) or 4 tires selected from tire 1. To operate the determining method mentioned above, it is desirable for the device to comprise a computer having a database to store the normal-time data of tire 1, or a determining means which compare the extracted data of 2 or 4 tires 1 and determine an abnormality from the difference of these extracted data.

The abnormality warning means 41 gives an alarm to a driver when the determining means 31 determines that it is abnormal. As the abnormality warning means 41, it is preferable to use warning lamp or warning alarm.

The device for detecting an abnormality of a rotating body according to the present invention having the configuration described above can extract a signal synchronized with the rotation of tire 1 as a output signal Y(i) easily and effectively even if not having precise signal of rotating speed of the tire. Thus, output signal Y(i) includes only a signal synchronized with the rotation of tire 1 such as burst, and excludes a signal cased by a phenomenon which happens only once for example when running on a curbstone, and having no correlation with a rotation of tire 1. Therefore abnormal determination can be performed correctly.

In the above, an example using signals of vibration and sound measured by a sensor 2 as an input signal X(i) is described. In addition to those, the present invention also can be adapted to a case using rotating speed signal of ABS as an input signal X(i). That is, for example, a rotating speed signal consisting of a sine wave of a predetermined period comprises a signal of burst or a signal caused by running on a curbstone as described above. Even in such a case, an output signal Y(i) comprising only a signal synchronized with the rotation of tire 1 can be obtained by sending the rotating speed signal through the extracting means 21 as input signal X(i).

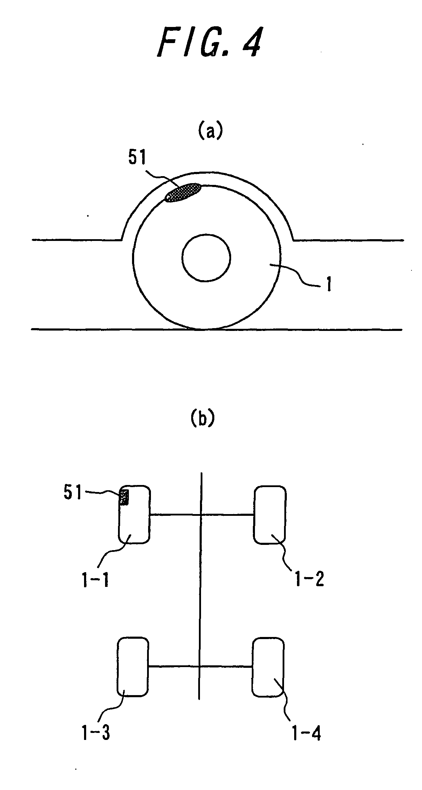

The actual waveform of the abnormality detecting device of rotating body according to the present invention is subsequently described. In a vehicle which comprises front wheel(left) 1-1, front wheel(right) 1-2, rear wheel(left) 1-3, and rear wheel(right) 1-4, as shown in Figs.4(a) and (b), a burst portion 51 is assumed to be generated in a shoulder portion of the front wheel(left) 1-1. The signal waveforms of the input signal X(i), output signal Y(i), and error signal E(i) of each tire were measured in early stage of outbreaking of the burst portion 51( the whole tire will be damaged in late stage) by measuring a vibrational acceleration using a sensor arranged on a knuckle portion of the tire for two cases running on good road and rough road.

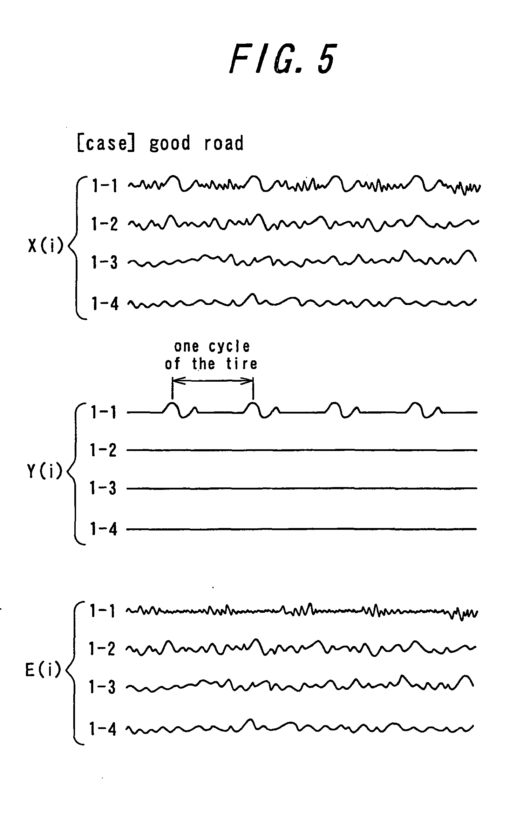

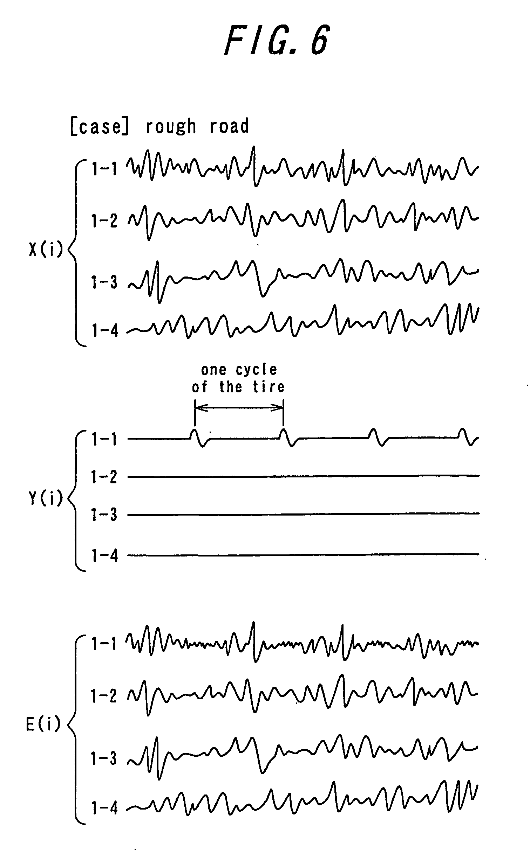

Fig.5 is a figure to show examples of input signal X (i), output signal Y (i), and error signal E (i) of each tire in good road, and Fig.6 is a figure to show examples of input signal X (i), output signal Y (i), and error signal E (i) of each tire in rough road. As seen from the two figures Fig.5 and Fig.6, even though a signal which has correlation with the rotation of the tire (signal occurred by the burst portion 51) is mixed with a signal which has no correlation with the rotation of the tire (signal occurred by the property of the road such as irregularity) as input signal X(i), the cyclical signal which shows the outbreaking of the burst is seen only in the output signal Y(i) of the front wheel(left) 1-1 which has the burst portion 51, and there are no signals in the output signals Y(i) of tire which have no abnormality, so that the device can determine the outbreaking of the burst correctly.

In addition, according to the invention, as shown by Fig.6, even though the input signal X(i) comprises a desired signal which has correlation with the rotation of tire (signal occurred by the burst portion 51) and a signal which has bigger amplitude of vibration than desired signal (signal occurred by the rough road), the cyclical signal which shows the outbreaking of the burst is seen only in the output signal Y(i) of the front wheel(left) 1-1 which has the burst portion 51 and the rest output signals Y(i) of normal wheels 1-2 to 1-4 show no signal, so that the device can determine the outbreaking of the burst correctly as the case running on a good road. In addition, in the examples shown in Fig.5 and Fig.6, the error signal E(i) is a changeable signal, which change alters the coefficient of the adaptive digital filter 23, and the characteristic of the adaptive digital filter 23 is changed based on the alternation of the coefficient of the filter.

The device for detecting an abnormality of a rotating body of the present invention described above is only a example, and its configuration is not limited to the described one. As another configuration of an extracting means different from those shown in Figs.2 and 3, the following configuration can be used.

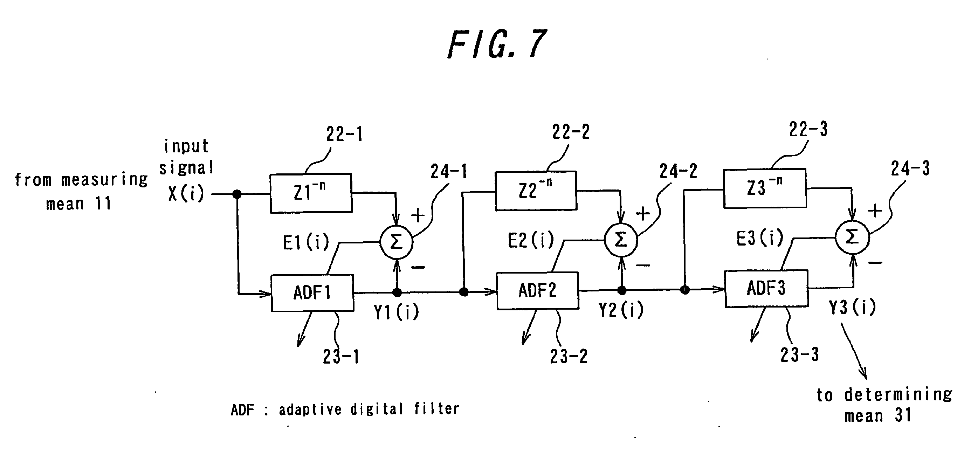

Fig. 7 is a block diagram to explain an example of another extracting means according to the invention. In an example shown in Fig.7, the same members as those of the examples of Figs.2 and 3 are denoted by the same referring numerals as those of Fig.2 and 3, and explanations for these members are omitted. When a signal not synchronized with the rotation of the tire (a signal generated by such as property of the road or vehicle body) is larger than a signal synchronized with the rotation of tire, or a signal synchronized with the rotation of tire is small, as shown in Fig.7, the device can extract the synchronized signal more accurately by using plural adaptive digital filters 23 connected in series (digital filters 23-1 to 23-3 in a shown example) than extract by using one digital filter 23. Namely, in an example shown in Fig.7, the accuracy of the extracting means is improved by operating the following process repeatedly; input a signal of vibration, sound, and rotating speed as a input signal X(i), and input a output signal Y1(i) of first filter 23-1 (ADF 1) to the second filter 23-2 (ADF 2). In addition, there are no limitations on the number of connected filters.

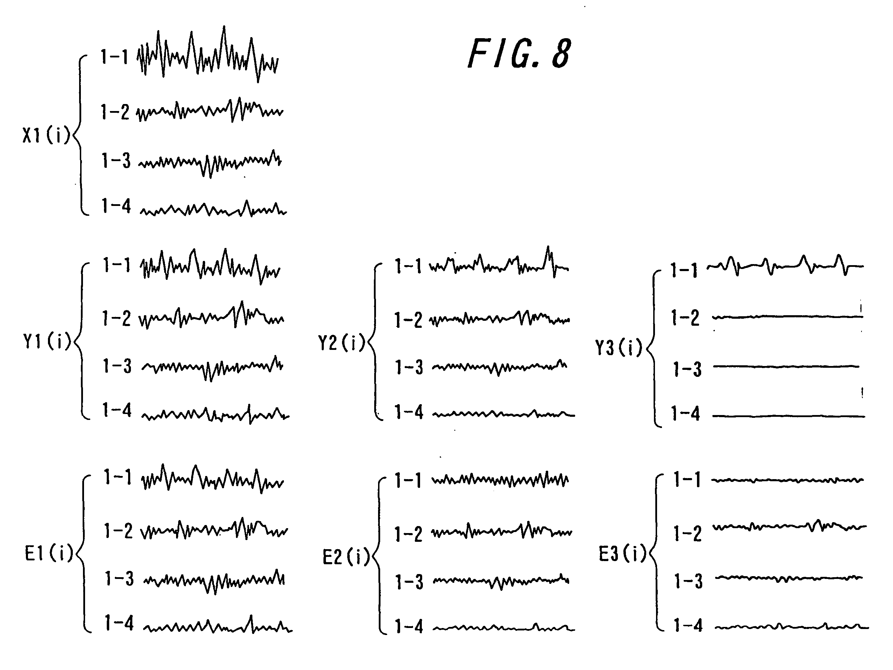

Fig. 8 is a figure to show one examples of input signal X (i), output signal Y (i), error signal E (i) in the extracting mean of Fig. 7. Here, output signal Y (i) is output signal 3, and error signal E (i) is error signal 3. As seen from the Fig.8, the extracting means can extract a defect more accurately in third output signal Y3 (i) than in second output signal Y2(i), in second output signal Y2(i) than in first output signal Y1(i).

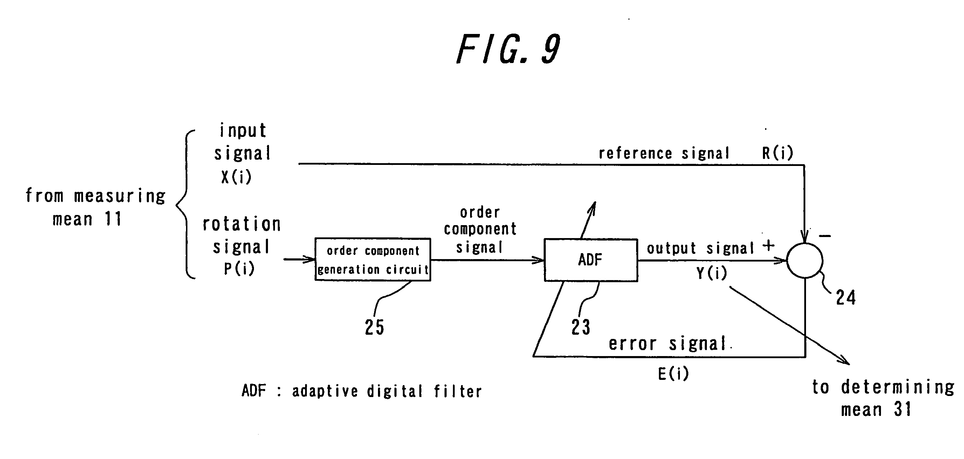

Fig. 9 is a block diagram to explain a still another example of an extracting mean according to the invention. In an example shown in Fig.9, the same members as those in the example of Figs.2 and 3 are denoted by the same referring numerals, and explanations for these members are omitted. As mentioned above, it can extract all cyclical signal by means of some logic of adaptive digital filter (such as connecting plural filters), however, besides a signal synchronized with the rotation occurred by the abnormality of the rotating body, it also extracts the signal occurred by the disturbance when it is synchronized with the rotation. Thus, as shown in Fig.9, an order component generation circuit 25 is provided between an input portion of rotating signal P(i) which is a rotational data from the measuring means 11 and the adaptive digital filter 23, and an order component used in extracting process is generated from the rotating data of rotating body (for example a rotating data from wheel rotating sensor in case of vehicle) in the circuit, so that only a desired signal is to be extracted by applying the order component to the adaptive digital filter 23. The thus generated order component is an arbitrary order number and not limited about the number to be generated. In addition, there are no limitations on the number of filters.

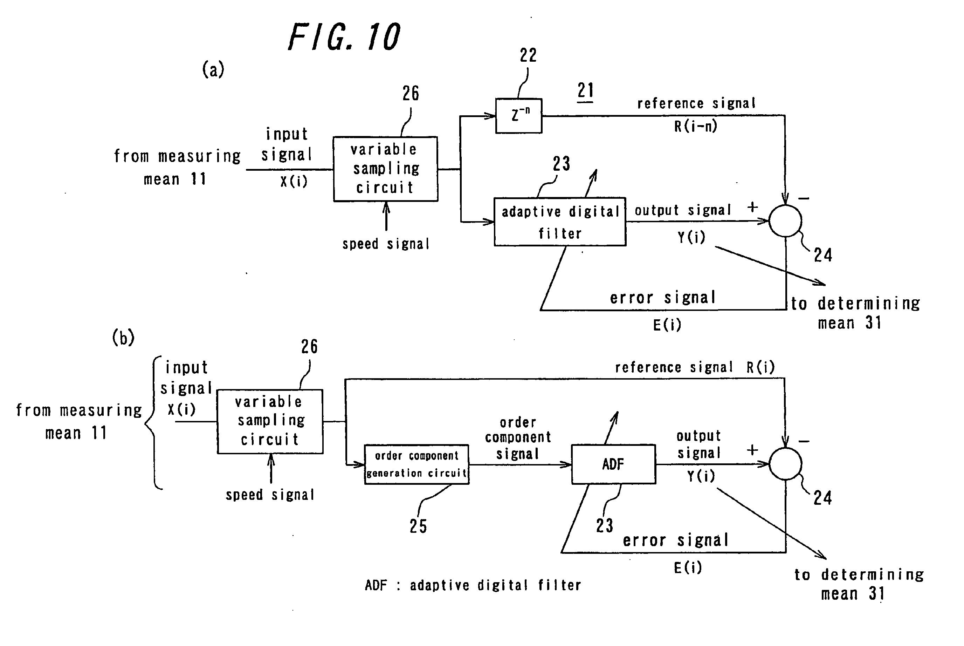

Figs. 10(a) and (b) are block diagrams to explain the other example of an extracting mean according to the invention. In the examples shown in Figs. 10(a) and (b), the same members as those in the examples of Figs.2 and 3 are denoted by the same referring numerals, and explanations for these members are omitted. When rotating speed of the rotating body (a speed of a vehicle in case of vehicle) is changed in examples of Figs.2, 3, 7, and 9, the adaptive digital filter 23 may not be able to be applied satisfactorily in some case. Thus, as shown in Figs. 10(a) and (b), a variable sampling circuit 26 is provided at an input portion from the measuring means, the sampling is to be variable by using a rotating data of rotating body (for example a ABS wheel speed signal in case of vehicle) for making the data of input signal to be a canonicalized rotating speed (cycle), and a logic to operate the process in the adaptive digital filter 23 in which the cycle appears to be constant is used, so that the filter can be satisfactorily respond to the change of the speed of the rotating body.

Plural units of the inventions of the Fig. 9 and Figs. 10(a) and (b) may also be connected in series to be one unit. In this case, it can improve the sampling accuracy further. In addition, there showed examples in which the variable sampling circuit 26 is respectively provided to the extracting means of using the delay circuit 22 in Figs. 10(a) and to the extracting means of using the order component generation circuit 25 in Figs. 10(b), it is also effective to provide a variable sampling circuit to another example of an extracting means, such as an extracting means in which plural adaptive digital filters 23 are connected in series as shown in Fig.7. Even more particularly, in the example using the order component generation circuit 25 as shown in Figs. 10(b), only a desired signal is extracted by generating order component from rotating speed data (cycle) normalized in the variable sampling circuit 26, and applying the thus extracted signal and input signal to the adaptive digital filter. Even more particularly, in an example shown in Figs. 10(a), the delay circuit 22 is placed between the a variable sampling circuit 26 and the determining mean 31, however, it may be placed between the variable sampling circuit 26 and the adaptive digital filter 23.

In addition, as another example of the determining means 31, it can determine the abnormality by operating a frequency analysis on the output signal Y(i) outputted from the adaptive digital filter 23, extracting an arbitrary order component of the rotation of rotating body by tracking the rotating signal, and comparing the additional data of those amplitude with the data of normal time. In addition, in using the adaptive digital filter 23 comprising the variable sampling circuit 26, since input data is normalized in optional signal, the comparison between the data of normal time and abnormal time can be taken by summing up the fixed arbitrary frequency of order component. The thus generated order component is arbitrary plural order numerals. Instead of operating a frequency analysis, it can be done by providing optional filter of order component, and comparing the amplitude of time base signal.

### INDUSTRIAL APPLICABILITY

As the device for detecting an abnormality of a rotating body according to the invention comprises, measuring means for measuring the various physical quantities of the rotating body in rotation, extracting means for extracting the signal which is synchronized with the rotation of rotating body by the data measured by the measuring means, determining means for determining a condition of the rotating body from the signal extracted by the extracting means, and abnormality warning means for giving warning of abnormality when the determining means determine that the condition of the rotating body is abnormal, it can detect an abnormality of the rotating body (it can be arrested as cyclical signal when the rotating body is rotating), in particular such as burst of tire, separation of tread, in early time, so that it can be applied to the use to prevent accidents caused by the abnormality of the rotating body.

## Claims

1. A device for detecting an abnormality of a rotating body (1) wherein the improvement comprises: means (11) for measuring various physical quantities of the rotating body in rotation; means (21) for extracting a signal which is synchronized with the rotation of rotating body by the data measured by the measuring means; means (31) for determining a condition of the rotating body from the signal extracted by the extracting means; and abnormality warning means (41) for giving warning of abnormality when the determining means determine that the condition of the rotating body is abnormal; **characterized in that** the extracting means comprise an adaptive digital filter (23) for extracting a signal synchronized with the rotation and picking out a signal having no correlation with the rotation by means of a data measured by the measuring means and a signal synchronized with the rotation extracted by the extracting means, and adapting the adaptive digital filter by means of the signal picked out and having no correlation with the rotation.

2. The device for detecting an abnormality of a rotating body as claimed in claim 1, wherein the various physical quantities of the rotating body measured by the measuring means is a signal correlated with vibration, sound, rotating number or rotation.

3. The device for detecting an abnormality of a rotating body as claimed in claim 1 or 2, wherein a delayed data of the data measured by the measuring means is used in extracting a signal synchronized with the rotation in the extracting means.

4. The device for detecting an abnormality of a rotating body as claimed in claim 3, wherein the data delay time corresponds to one rotation time of the rotating body.

5. The device for detecting an abnormality of a rotating body as claimed in claim 3 or 4, wherein a delay circuit (22) to delay the data is provided on a signal line between an input portion of data from the measuring means and an adaptive digital filter.

6. The device for detecting an abnormality of a rotating body as claimed in claim 3 or 4, wherein a delay circuit to delay the data is provided on a signal line between an input portion of data from the measuring means and a comparator to extract a signal having no correlation with the rotation.

7. The device for detecting an abnormality of a rotating body as claimed in claim 1 or 2, wherein an order component generated by calculating a rotating cycle from data of rotating information among the data measured by the measuring means is used in extracting a signal synchronized with the rotation in the extracting means.

8. The device for detecting an abnormality of a rotating body as claimed in claim 7, wherein an order component generation circuit (25) to generate the order component is provided on a signal line between an input portion of rotation information data from the measuring means and an adaptive digital filter.

9. The device for detecting an abnormality of a rotating body as claimed in any of claim 1 to 8, wherein the data measured by the measuring means is sampled by a variable sampling in accordance with the data of rotating speed information of the data measured by the measuring means so as to make an apparent cycle constant in extracting a signal synchronized with the rotation in the extracting means.

10. The device for detecting an abnormality of a rotating body as claimed in claim 9, wherein a variable sampling circuit (26) to perform a variable sampling is provided on the input portion of data from the measuring means.

11. A method for detecting an abnormality of a rotating body (1), **characterized in that**, by means of the device for detecting an abnormality of a rotating body as claimed in any one of claim 1 to 10, it extracts a signal synchronized with the rotation of the rotating body from the various physical quantities of the rotating body in rotation, and detects the abnormality of the rotating body by using the extracted signal.

## Patentansprüche

1. Vorrichtung zum Ermitteln einer Abnormität eines rotierenden Körpers (1), wobei die Verbesserung umfasst: Mittel (11) zum Messen verschiedener physikalischer Größen des rotierenden Körpers in Rotation; Mittel (21) zum Extrahieren eines Signals, das durch die Daten, die durch die Messmittel gemessen werden, mit der Rotation des rotierenden Körpers synchronisiert wird; Mittel (31) zum Bestimmen eines Zustandes des rotierenden Körpers aus dem durch die Extraktionsmittel extrahierten Signal; und Abnormitätswarnmittel (41) zum Warnen vor Abnormität, wenn die Bestimmungsmittel bestimmen, dass der Zustand des rotierenden Körpers abnorm ist; **dadurch gekennzeichnet, dass** die Extraktionsmittel ein adaptives digitales Filter (23) zum Extrahieren eines mit der Rotation synchronisierten Signals und zum Auswählen eines Signals, das keine Korrelation mit der Rotation aufweist, mittels durch die Messmittel gemessener Daten und eines durch die Extraktionsmittel extrahierten mit der Rotation synchronisierten Signals umfassen und zum Anpassen des adaptiven Filters mittels des Signals, das ausgewählt wurde und keine Korrelation mit der Rotation aufweist.

2. Vorrichtung zum Ermitteln einer Abnormität eines rotierenden Körpers nach Anspruch 1, wobei die durch die Messmittel gemessenen verschiedenen physikalischen Größen des rotierenden Körpers ein mit Vibration, Klang, Drehzahl oder Rotation korreliertes Signal sind.

3. Vorrichtung zum Ermitteln einer Abnormität eines rotierenden Körpers nach Anspruch 1 oder 2, wobei verzögerte Daten der durch die Messmittel gemessenen Daten beim Extrahieren eines mit der Rotation synchronisierten Signals in den Extraktionsmitteln verwendet werden.

4. Vorrichtung zum Ermitteln einer Abnormität eines rotierenden Körpers nach Anspruch 3, wobei die Datenverzögerungszeit einer Rotationszeit des rotierenden Körpers entspricht.

5. Vorrichtung zum Ermitteln einer Abnormität eines rotierenden Körpers nach Anspruch 3 oder 4, wobei eine Verzögerungsschaltung (22) zum Verzögern der Daten auf einem Signalweg zwischen einem Eingangsabschnitt für Daten von den Messmitteln und einem adaptiven digitalen Filter vorgesehen ist.

6. Vorrichtung zum Ermitteln einer Abnormität eines rotierenden Körpers nach Anspruch 3 oder 4, wobei eine Verzögerungsschaltung zum Verzögern der Daten auf einem Signalweg zwischen einem Eingangsabschnitt für Daten von den Messmitteln und einem Komparator zum Extrahieren eines Signals, das keine Korrelation mit der Rotation aufweist, vorgesehen ist.

7. Vorrichtung zum Ermitteln einer Abnormität eines rotierenden Körpers nach Anspruch 1 oder 2, wobei eine Ordnungszahlkomponente, die durch Berechnen eines Rotationszyklus aus Daten mit Rotationsinformation unter den durch die Messmittel gemessenen Daten erzeugt wird, beim Extrahieren eines mit der Rotation synchronisierten Signals in den Extraktionsmitteln verwendet wird.

8. Vorrichtung zum Ermitteln einer Abnormität eines rotierenden Körpers nach Anspruch 7, wobei eine Ordnungszahlkomponentenerzeugungsschaltung (25) zum Erzeugen der Ordnungszahlkomponente auf einem Signalweg zwischen einem Eingangsabschnitt für Rotationsinformationsdaten von den Messmitteln und einem adaptiven digitalen Filter vorgesehen ist.

9. Vorrichtung zum Ermitteln einer Abnormität eines rotierenden Körpers nach einem der Ansprüche 1 bis 8, wobei die durch die Messmittel gemessenen Daten durch eine variable Abtastung gemäß den Daten der Drehgeschwindigkeitsinformation aus den durch die Messmittel gemessenen Daten abgetastet werden, um **dadurch** einen offensichtlichen Zyklus beim Extrahieren eines mit der Rotation synchronisierten Signals in den Extraktionsmitteln konstant zu machen.

10. Vorrichtung zum Ermitteln einer Abnormität eines rotierenden Körpers nach Anspruch 9, wobei eine variable Abtastschaltung (26) zur Durchführung einer variablen Abtastung auf dem Eingangsabschnitt für Daten von den Messmitteln vorgesehen ist.

11. Verfahren zum Ermitteln einer Abnormität eines rotierenden Körpers (1), **dadurch gekennzeichnet, dass** es mittels der Vorrichtung zum Ermitteln einer Abnormität eines rotierenden Körpers nach einem der Ansprüche 1 bis 10 ein mit der Rotation des rotierenden Körpers synchronisiertes Signal aus den verschiedenen physikalischen Größen des rotierenden Körpers in Rotation extrahiert und die Abnormität des rotierenden Körpers durch Verwenden des extrahierten Signals ermittelt.

## Revendications

1. Dispositif destiné à détecter une anomalie d'un corps en rotation (1) dans lequel l'amélioration comprend : un moyen (11) pour mesurer diverses grandeurs physiques du corps en rotation ; un moyen (21) pour extraire un signal qui est synchronisé sur la rotation du corps en rotation par le biais des données mesurées par le moyen de mesure ; un moyen (31) pour déterminer un état du corps en rotation à partir du signal extrait par le moyen d'extraction, et un moyen de signalisation d'anomalie (41) pour signaler une anomalie lorsque le moyen de détermination détermine que l'état du corps en rotation présente une anomalie, **caractérisé en ce que** le moyen d'extraction comporte un filtre numérique adaptatif (23) destiné à extraire un signal synchronisé sur la rotation, et à choisir un signal ne présentant pas de corrélation avec la rotation, par le biais de données mesurées par le moyen de mesure, et un signal synchronisé sur la rotation extrait par le moyen d'extraction, et pour adapter le filtre numérique adaptatif au moyen du signal choisi ne présentant pas de corrélation avec la rotation.

2. Dispositif destiné à détecter une anomalie d'un corps en rotation selon la revendication 1, dans lequel les diverses grandeurs physiques du corps en rotation mesurées par le moyen de mesure représentent un signal corrélé avec une vibration, un son, un nombre de rotation ou une rotation.

3. Dispositif destiné à détecter une anomalie d'un corps en rotation selon la revendication 1 ou 2, dans lequel des données retardées, parmi les données mesurées par le moyen de mesure, sont utilisées pour extraire un signal synchronisé sur la rotation dans le moyen d'extraction.

4. Dispositif destiné à détecter une anomalie d'un corps en rotation selon la revendication 3, dans lequel le temps de retard des données correspond à un temps de rotation du corps en rotation.

5. Dispositif destiné à détecter une anomalie d'un corps en rotation selon la revendication 3 ou 4, dans lequel un circuit à retard (22) destiné à retarder les données est fourni sur une ligne de signal entre une partie d'entrée de données du moyen de mesure et un filtre numérique adaptatif.

6. Dispositif destiné à détecter une anomalie d'un corps en rotation selon la revendication 3 ou 4, dans lequel un circuit à retard destiné à retarder les données est fourni sur une ligne de signal entre une partie d'entrée de données du moyen de mesure et un comparateur destiné à extraire un signal ne présentant pas de corrélation avec la rotation.

7. Dispositif destiné à détecter une anomalie d'un corps en rotation selon la revendication 1 ou 2, dans lequel une composante d'ordre, générée en calculant un cycle de rotation à partir de données d'information de rotation parmi les données mesurées par le moyen de mesure, est utilisée pour extraire un signal synchronisé avec la rotation dans le moyen d'extraction.

8. Dispositif destiné à détecter une anomalie d'un corps en rotation selon la revendication 7, dans lequel un circuit de génération de composantes d'ordre (25), destiné à générer la composante d'ordre, est délivré sur une ligne de signal, entre une partie d'entrée de données d'informations de rotation du moyen de mesure et un filtre numérique adaptatif.

9. Dispositif destiné à détecter une anomalie d'un corps en rotation selon l'une quelconque des revendications 1 à 8, dans lequel les données mesurées par le moyen de mesure sont échantillonnées par le biais d'un échantillonnage variable selon les données d'information sur la vitesse de rotation des données mesurées par le moyen de mesure, afin de rendre un cycle apparent constant dans l'extraction d'un signal synchronisé avec la rotation dans le moyen d'extraction.

10. Dispositif destiné à détecter une anomalie d'un corps en rotation selon la revendication 9, dans lequel un circuit d'échantillonnage variable (26), destiné à mettre en oeuvre un échantillonnage variable, est délivré sur la partie d'entrée de données provenant du moyen de mesure.

11. Procédé destiné à détecter une anomalie d'un corps en rotation (1), **caractérisé en ce que**, par le biais du dispositif destiné à détecter une anomalie d'un corps en rotation selon l'une quelconque des revendications 1 à 10, il extrait un signal synchronisé sur la rotation du corps en rotation à partir des diverses grandeurs physiques du corps en rotation, et il détecte l'anomalie du corps en rotation en utilisant le signal extrait.
